# EUROPÄISCHE PATENTSCHRIFT

(11) **EP 1 794 037 B1**
(45) Veröffentlichungstag und Bekanntmachung des Hinweises auf die Patenterteilung: **13.02.2008**
(21) Anmeldenummer: 05781815.5
(22) Anmeldetag: 03.09.2005
(51) Int. Cl.: B60R 21/20

(54) **FAHRZEUGSITZ MIT EINEM IN EINEM SITZTEIL INTEGRIERTEN GASSACK**
VEHICLE SEAT COMPRISING AN AIRBAG INTEGRATED IN ONE PART OF THE SEAT
SIEGE DE VEHICULE COMPORTANT UN AIRBAG INTEGRE DANS UNE PARTIE SIEGE

(30) Priorität: 14.09.2004 DE 102004044256
(43) Veröffentlichungstag der Anmeldung: 13.06.2007
(73) Patentinhaber: AUTOLIV DEVELOPMENT AB, 447 83 Vargarda (SE)
(72) Erfinder: HUBER, Joachim, 85414 Kirchdorf (DE)
(74) Vertreter: Müller, Karl-Ernst
(86) Internationale Anmeldenummer: PCT/EP2005/009479
(87) Internationale Veröffentlichungsnummer: WO 2006/029729

(56) Entgegenhaltungen:
- EP-A- 0 818 366
- EP-A- 1 069 005
- US-A- 3 514 124
- US-A- 5 749 597

## Beschreibung

Die Erfindung betrifft einen Fahrzeugsitz mit einem in einem Sitzteil integrierten Gassack, wobei der Gassack an einem an dem Fahrzeugsitz befestigten Gasgenerator festgelegt und in Faltung an dem Sitzteil angeordnet ist und der als Kissen ausgebildete Sitzteil auf seiner Außenseite von einem eine Sollbruchstelle aufweisenden Sitzbezug umschlossen ist derart, dass bei Auslösung der sich aufblasende Gassack den Sitzbezug sprengt und sich durch eine Austrittsöffnung aus dem Sitzteil heraus in den Innenraum eines den Fahrzeugsitz aufnehmenden Fahrzeuges entfaltet.

Ein Fahrzeugsitz mit den vorgenannten Merkmalen ist der EP 0 818 366 B1 zu entnehmen. Hierbei ist in der als Polsterkissen ausgebildeten Seitenwange des Fahrzeugsitzes als Sitzteil ein Gasgenerator angeordnet. Der zugehörige Gassack umschlingt mit einem Abschnitt den Gasgenerator und ist durch einen in der Seitenwange ausgebildeten Kanal zur Außenseite der Seitenwange geführt und hier zwischen dem Polsterkissen und einem dieses umschließenden Sitzbezug eingefaltet, wozu das Polsterkissen auf seiner Außenseite mit einer entsprechenden Muldung zur Aufnahme des darin eingefalteten Gassackes versehen ist. Der Sitzbezug ist mit einer Schwächung als Sollbruchstelle versehen, so dass der Sitzbezug bei Auslösung des Gasgenerators und Aufblasen des Gassackes aufreißt und ein Entfalten des Gassackes durch eine entstehende Austrittsöffnung in den Innenraum des entsprechenden Fahrzeuges ermöglicht.

Mit dem bekannten Fahrzeugsitz und der Unterbringung des Gassackes darin ist der Nachteil verbunden, dass die Montage des Gassackes an der Oberfläche des Polsterkissens einschließlich der Notwendigkeit des anschließenden Überziehens mit dem einteiligen und lediglich eine Schwächung als Sollbruchstelle aufweisenden Sitzbezug schwierig ist. Es kommt hinzu, dass die Entfaltung des Gassacks aufgrund der großflächigen Einfaltung ungerichtet erfolgt.

Der Erfindung liegt daher die Aufgabe zugrunde, bei einem Fahrzeugsitz mit den eingangs genannten, gattungsgemäßen Merkmalen die Anordnung und Montage des Gassackes an dem zugeordneten Sitzteil zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in Ihrem Grundgedanken vor, dass die Sollbruchstelle des Sitzbezuges als eine die beiden an die Austrittsöffnung für den Gassack angrenzenden Bereiche des Sitzbezuges verbindende Naht ausgebildet ist und der Gassack mit seinem in Entfaltungsrichtung weisenden Abschnitt mit der Naht verbunden und dadurch an dem Sitzteil fixiert ist. Mit der Erfindung ist der Vorteil verbunden, dass die Fixierung des in dem Sitzteil vormontierten Gassackes erst gemeinsam mit dem Schließen der Sitzbezugsnaht erfolgt.

Nach einem Ausführungsbeispiel der Erfindung ist vorgesehen, dass der Gassack unmittelbar mit der Naht des Sitzbezuges verbunden ist, wobei die die Sitzbezugbereiche verbindende Naht nach einem Ausführungsbeispiel der Erfindung durch das Gassackgewebe hindurchgeführt ist.

In einer alternativen Ausführungsform ist vorgesehen, dass der Gassack mittelbar mit der Naht des Sitzbezuges verbunden ist.

Im Einzelnen kann vorgesehen sein, dass ein Halteglied von der Sitzbezugnaht erfasst und am Sitzbezug befestigt ist, wobei der Gassack seinerseits an dem Halteglied fixiert ist. Hierzu kann vorgesehen sein, dass das Halteglied zwischen den von der Naht verbundenen Bereichen des Sitzbezuges angeordnet und von dem Nahtmaterial durchstoßen wird.

Alternativ kann vorgesehen sein, dass das Halteglied als Materialstreifen ausgebildet und der Gassack mittels einer gesonderten Reißnaht mit dem Materialstreifen verbunden ist, wobei das Halteglied beispielsweise aus einem textilen Materialstreifen oder aus einem Kunststoff-Materialstreifen bestehen kann.

In einer weiteren, alternativen Ausführungsform kann vorgesehen sein, dass der in Entfaltungsrichtung weisende Abschnitt des Gassacks nach innen eingestülpt ist, wobei das Halteglied zwischen die die Einstülpung einfassenden Seitenbereiche des Gassacks reicht und die Seitenbereiche mit dem Halteglied über eine Reißnaht verbunden sind. Im Hinblick auf eine platzsparende Unterbringung kann weiterhin vorgesehen sein, dass zusätzlich die oberen und/oder unteren Abschnitte des Gassacks eingestülpt sind.

In weiteren Ausführungsbeispielen der Erfindung kann zur Befestigung des vorderen Abschnitts des Gassackes mit der Sitzbezugnaht vorgesehen sein, dass das Halteglied an seinem freien Ende eine hakenförmige Gestaltung zur Halterung des Gassacks aufweist, wobei der Gassack mit einer in seinem Randbereich ausgebildeten Öffnung in die hakenförmige Gestaltung des Haltegliedes eingehängt ist beziehungsweise alternativ der Gassack eine schlaufenförmig ausgebildete Fadenlose aufweist, die in die hakenförmige Gestaltung des Haltegliedes eingehängt ist.

Es kann vorgesehen sein, dass der mit der Naht verbundene Abschnitt des Gassacks dessen Befestigungsabschnitt am Gasgenerator gegenüberliegend ausgerichtet ist derart, dass sich eine in Entfaltungsrichtung langgestreckte Unterbringung des Gassacks in dem Sitzteil ergibt. Hiermit ist der Vorteil verbunden, dass aufgrund der in der Entfaltungsrichtung recht lang gestreckten Anordnung des gefalteten Gassacks dieser sich sehr schnell bei seiner Entfaltung positionieren kann, wobei die langgestreckte Unterbringung des Gassackes in dem Sitzteil auch eine automatische Führung des Gassackes bei dessen Entfaltung bedeutet.

In der Zeichnung sind Ausführungsbeispiele der Erfindung wiedergegeben, welche nachstehend beschrieben sind. Es zeigen:
- Fig .1: eine Rücklehne eines Fahrzeugsitzes mit vorspringender Seitenwange als ein den Gassack aufnehmendes Sitzteil in einer schematischen Teil-Draufsicht,
- Fig. 2: die Anbindung des Gassackes an einer Sitzbezugsnaht in einer vergrößerten, schematischen Einzeldarstellung,
- Fig. 3: den Gegenstand der Figur 2 in einer anderen Ausführungsform,
- Fig. 4: den Gegenstand der Figur 2 in einer weiteren Ausführungsform,
- Fig. 5: den Gegenstand der Figur 4 in einer abgewandelten Ausführungsform,
- Fig. 6: die Unterbringung des Gassackes in einem Sitzteil in einer von der Darstellung in Figur 1 verschiedenen Ausführungsform,
- Fig. 7: die Anbindung des Gassackes an die Sitzbezugsnaht in der Unterbringung gemäß Figur 6 in einer vergrößerten, schematischen Einzeldarstellung.

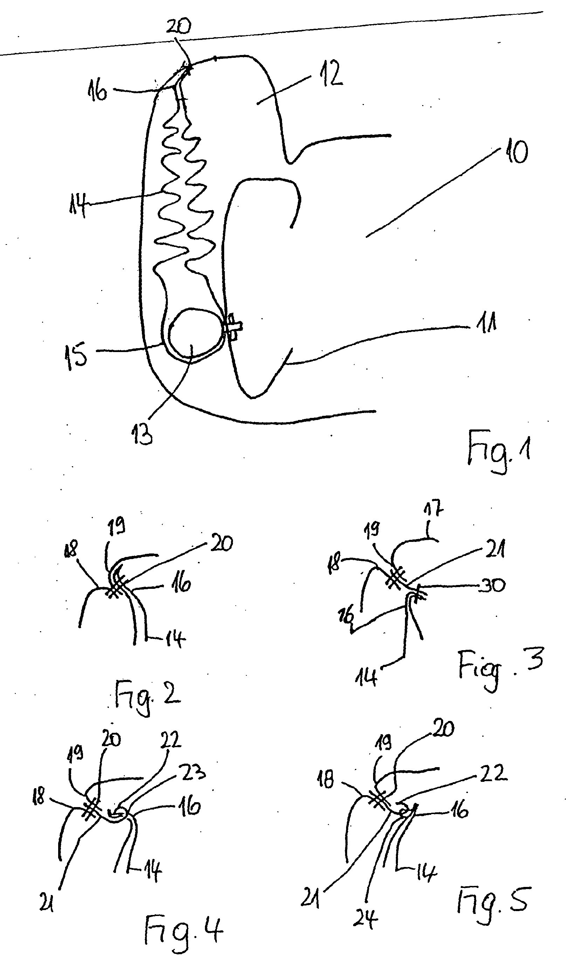

Aus Figur 1 ergibt sich eine Rückenlehne 10 mit einem Sitzrahmen 11 und einer von der Rückenlehne 10 vorspringenden Seitenwange 12. Die Seitenwange 12 ist als ein einen Gassack 14 aufnehmenden Sitzteil in Form eines Polsterkissens ausgebildet.

An dem Sitzrahmen 11 ist ein Gasgenerator 13 befestigt, wobei der in der Seitenwange 12 eingefaltete Gassack 14 mit einem Befestigungsabschnitt 15 um den Gasgenerator 13 herumgeführt und dadurch an dem Gasgenerator 13 festgelegt ist. Mit seinem sich in der Seitenwange 12 nach vorne, in Entfaltungsrichtung erstreckenden Abschnitt 16 ist der Gassack 14 an der Naht 20 eines die Seitenwange 12 umschließenden Sitzbezuges 17 befestigt, wobei die Naht 20 die beiderseits einer sich bei Entfaltung des Gassackes 14 aus der Seitenwange 12 heraus öffnenden Entfaltungs-öffnung angrenzenden Bereiche 18 und 19 des Sitzbezuges 17 miteinander verbindet. Die Ausbildung der Sitzbezugsnaht 20 einschließlich der Befestigung des Abschnitts 16 des Gassackes 14 daran ist insbesondere den Figuren 2 bis 5 im Einzelnen zu entnehmen.

Bei dem in Figur 2 dargestellten Ausführungsbeispiel ist der vordere Abschnitt 16 des Gassackes 14 unmittelbar mit dem Sitzbezug 17 verbunden, indem der Abschnitt 16 mit den nach Innen eingezogenen Bereichen 18, 19 des Sitzbezuges zusammengefasst und durch eine gemeinsame Naht 20 mit dem Sitzbezug 17 unmittelbar verbunden ist.

Bei den in Figuren 3 bis 5 dargestellten Ausführungsbeispielen ist zur Befestigung des Abschnitts 16 des Gassackes 14 an dem Sitzbezug 17 ein gesondertes Halteglied 21 vorgesehen, welches als textiler Materialstreifen oder auch als Kunststoffstreifen ausgebildet sein kann. Bei dem in Figur 3 dargestellten Ausführungsbeispiel ist das eine Ende des Haltegliedes 21 zwischen die nach Innen eingezogenen Bereiche 18, 19 des Sitzbezuges 17 gelegt und mittels der alle drei Teile durchstoßenden Naht 20 befestigt. An dem freien Ende des Haltegliedes 21 ist der Abschnitt 16 des Gassackes 14 mittels einer gesonderten Reißnaht 30 festgelegt.

Bei den in den Figuren 4 und 5 dargestellten Ausführungsbeispielen weist das freie Ende des Haltegliedes 21 eine hakenförmige Gestaltung 22 auf, und bei dem in Figur 4 dargestellten Ausführungsbeispiel ist der Abschnitt 16 des Gassacks 14 mit einer in seinem Randbereich ausgebildeten Öffnung 23 auf die hakenförmige Gestaltung 22 aufgefädelt, während bei dem in Figur 5 dargestellten Ausführungsbeispiel an dem Gassack 14 eine schlaufenförmige Fadenlose 24 vorgesehen ist, die auf die hakenförmige Gestaltung 22 des Haltegliedes 21 aufgefädelt ist.

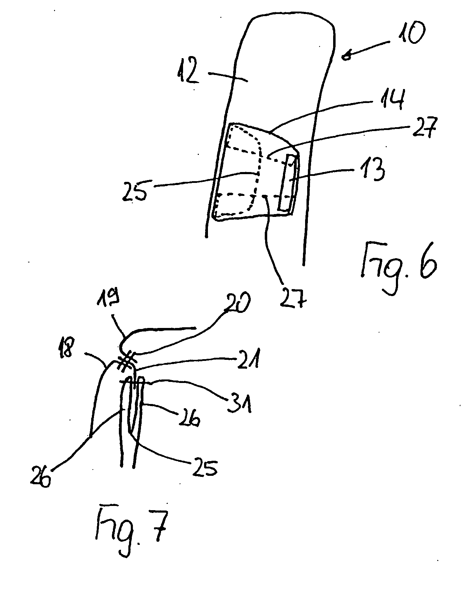

Bei dem in Figuren 6 und 7 dargestellten Ausführungsbeispiel ist der sich in Entfaltungsrichtung erstreckende Abschnitt 16 des Gassackes 14 nach Innen eingestülpt, so dass sich eine zwischen Seitenbereichen 26 liegende Einstülpung 25 ergibt; hiermit wird eine platzsparende Unterbringung des Gassackes bei nicht so ausgeprägten Seitenwangen 12 eines Fahrzeugsitzes ermöglicht. Bei diesem Ausführungsbeispiel ist das an der Sitzbezugsnaht 20 befestigte Halteglied 21 zwischen die Seitenbereiche 26 des Gassackes geführt, und hier mittels einer die Seitenbereiche 26 und das freie Ende des Haltegliedes 21 zusammenfassenden Reißnaht 31 mit dem Gassack 14 verbunden.

Wie sich ferner aus Figur 6 ergibt, können aus Gründen weiterer Platzeinsparung auch die oberen beziehungsweise unteren Bereiche des Gassackes als Einstülpungen 27 ausgebildet sein.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Fahrzeugsitz mit einem in einem Sitzteil (12) integrierten Gassack (14), wobei der Gassack (14) an einem an dem Fahrzeugsitz befestigten Gasgenerator (13) festgelegt und in Faltung an dem Sitzteil (12) angeordnet ist und der als Kissen ausgebildete Sitzteil (12) auf seiner Außenseite von einem eine Sollbruchstelle aufweisenden Sitzbezug (17) umschlossen ist derart, dass bei Auslösung der sich aufblasende Gassack (14) den Sitzbezug (17) sprengt und sich durch eine Austrittsöffnung aus dem Sitzteil (17) heraus in den Innenraum eines den Fahrzeugsitz aufnehmenden Fahrzeuges entfaltet, **dadurch gekennzeichnet, dass** die Sollbruchstelle des Sitzbezuges (17) als eine die beiden an die Austrittsöffnung für den Gassack (14) angrenzenden Bereiche (18, 19) des Sitzbezuges (17) verbindende Naht (20) ausgebildet ist und der Gassack (14) mit seinem in Entfaltungsrichtung weisenden Abschnitt (16) mit der Naht (20) verbunden und dadurch an dem Sitzteil (12) fixiert ist.

2. Fahrzeugsitz nach Anspruch 1, **dadurch gekennzeichnet, dass** der Gassack (14) unmittelbar mit der Naht (20) des Sitzbezuges (17) verbunden ist.

3. Fahrzeugsitz nach Anspruch 2, **dadurch gekennzeichnet, dass** die die Sitzbezugbereiche (18, 19) verbindende Naht (20) durch das Gewebe des Gassackes (14) hindurchgeführt ist.

4. Fahrzeugsitz nach Anspruch 1, **dadurch gekennzeichnet, dass** der Gassack (14) mittelbar mit der Naht (20) des Sitzbezuges (17) verbunden ist.

5. Fahrzeugsitz nach Anspruch 4, **dadurch gekennzeichnet, dass** ein Halteglied (21) von der Sitzbezugnaht (20) erfasst und an dem Sitzbezug (17) befestigt ist und der Gassack (14) an dem Halteglied (21) fixiert ist.

6. Fahrzeugsitz nach Anspruch 5, **dadurch gekennzeichnet, dass** das Halteglied (21) zwischen den von der Naht (20) verbundenen Bereichen (18, 19) des Sitzbezuges angeordnet und von dem Nahtmaterial durchstoßen ist.

7. Fahrzeugsitz nach Anspruch 5 oder 6, **dadurch gekennzeichnet, dass** das Halteglied (21) als Materialstreifen ausgebildet und der Gassack (14) mittels einer gesonderten Reißnaht (30) mit dem Materialstreifen verbunden ist.

8. Fahrzeugsitz nach Anspruch 7, **dadurch gekennzeichnet, dass** der Materialstreifen aus textilem Material besteht.

9. Fahrzeugsitz nach Anspruch 7, **dadurch gekennzeichnet, dass** der Materialstreifen aus Kunststoff besteht.

10. Fahrzeugsitz nach einem der Ansprüche 5 bis 9, **dadurch gekennzeichnet, dass** der in Entfaltungsrichtung weisende Abschnitt (16) des Gassacks (14) nach innen eingestülpt ist, wobei das Halteglied (21) zwischen die die Einstülpung (25) einfassenden Seitenbereiche (26) des Gassacks (14) reicht und die Seitenbereiche (26) mit dem Halteglied (21) über eine Reißnaht (31) verbunden sind.

11. Fahrzeugsitz nach Anspruch 10, **dadurch gekennzeichnet, dass** zusätzlich die oberen und/oder unteren Abschnitte (27) des Gassacks (14) eingestülpt sind.

12. Fahrzeugsitz nach einem der Ansprüche 5 bis 9, **dadurch gekennzeichnet, dass** das Halteglied (21) an seinem freien Ende eine hakenförmige Gestaltung (22) zur Halterung des Gassacks (14) aufweist.

13. Fahrzeugsitz nach Anspruch 12, **dadurch gekennzeichnet, dass** der Gassack (14) mit einer in seinem Randbereich ausgebildeten Öffnung (23) in die hakenförmige Gestaltung (22) des Haltegliedes (21) eingehängt ist.

14. Fahrzeugsitz nach Anspruch 12, **dadurch gekennzeichnet, dass** der Gassack (14) eine schlaufenförmig ausgebildete Fadenlose (24) aufweist, die in die hakenförmige Gestaltung (22) des Haltegliedes (21) eingehängt ist.

15. Fahrzeugsitz nach einem der Ansprüche 1 bis 14, **dadurch gekennzeichnet, dass** der mit der Naht (20) verbundene Abschnitt (16) des Gassacks (14) dessen Befestigungsabschnitt (15) am Gasgenerator (13) gegenüberliegend ausgerichtet ist derart, dass sich eine in Entfaltungsrichtung langgestreckte Unterbringung des Gassacks (14) in dem Sitzteil (12) ergibt.

## Claims

1. A vehicle seat with an airbag (14) integrated in a seat part (12), wherein the airbag (14) is fixed on a gas generator (13) fixed on the vehicle seat and is disposed in folds on the seat part (12) and the seat part (12) constructed as a cushion is so enclosed on its outside by a seat covering (17) having an predetermined breaking point that on triggering the inflating airbag (14) bursts the seat covering (17) and unfolds through an outlet opening out of the seat part (12) into the interior of a vehicle accommodating the vehicle seat, **characterized in that** the predetermined breaking point of the seat covering (17) is constructed as a seam (20) connecting the two areas (18, 19) of the seat covering (17) adjoining the outlet opening for the airbag (14) and the airbag (14) is connected to the seam (20) with its section (16) directed in the unfolding direction, and is thus fixed on the seat part (12).

2. A vehicle seat according to claim 1,
**characterized in that** the airbag (14) is connected directly to the seam (20) of the seat covering (17).

3. A vehicle seat according to claim 2,
**characterized in that** the seam (20) connecting the seat covering areas (18, 19) is passed through the fabric of the airbag (14).

4. A vehicle seat according to claim 1,
**characterized in that** the airbag (14) is indirectly connected to the seam (20) of the seat covering (17).

5. A vehicle seat according to claim 4,
**characterized in that** a holding member (21) is engaged by the seat covering seam (20) and is fixed on the seat covering (17) and the airbag (14) is fixed on the holding member (21).

6. A vehicle seat according to claim 5,
**characterized in that** the holding member (21) is disposed between the seat covering areas (18, 19) connected by the seam (20) and is pierced by the seam material.

7. A vehicle seat according to claim 5 or 6,
**characterized in that** the holding member (21) is constructed as a material strip and the airbag (14) is connected to the material strip by a separate tearable seam (30).

8. A vehicle seat according to claim 7,
**characterized in that** the material strip consists of textile material.

9. A vehicle seat according to claim 7,
**characterized in that** the material strip consists of plastic material.

10. A vehicle seat according to any one of the claims 5 to 9, **characterized in that** the section (16) of the airbag (14) directed in the unfolding direction is inwardly inverted, the holding member (21) extending between the side areas (26) of the airbag (14) enclosing the inversion (25) and the side areas (26) are connected to the holding member (21) via a tearable seam (31).

11. A vehicle seat according to claim 10,
**characterized in that** the top and/or bottom sections (27) of the airbag (14) are additionally inverted.

12. A vehicle seat according to any one of the claims 5 to 9, **characterized in that** the holding member (21) has at its free end a hook-shaped formation (22) for mounting the airbag (14).

13. A vehicle seat according to claim 12,
**characterized in that** the airbag (14) is engaged with an opening (23) formed in its edge area, into the hook-shaped formation (22) of the holding member (21).

14. A vehicle seat according to claim 12,
**characterized in that** the airbag (14) has a thread slack (24) in the form of a loop, which is engaged in the hook-shaped formation (22) of the holding member (21).

15. A vehicle seat according to any one of the claims 1 to 14, **characterized in that** that section (16) of the airbag (14) which is connected to the seam (20) is aligned opposite the fixing section (15) thereof on the gas generator (13) in such manner that the airbag (14) is so accommodated in the seat part (12) as to be elongated in the unfolding direction.

## Revendications

1. Siège de véhicule avec un coussin gonflable (14) intégré dans une partie du siège (12), le coussin gonflable (14) étant fixé contre un générateur de gaz (13), fixé contre le siège du véhicule, et étant agencé sous forme pliée sur la partie du siège (12), et la partie du siège (12), réalisée sous forme de coussin, est enveloppée sur sa face extérieure d'un habillage de siège (17), comportant une zone destinée à rupture, de telle sorte que, lors du déclenchement, le coussin gonflable (14) en se gonflant déchire l'habillage de siège (17) et se déploie à travers une ouverture de sortie hors de l'habillage de siège (17) pour se déplier dans l'habitacle d'un véhicule recevant le siège du véhicule, **caractérisé en ce que** la zone destinée à rupture de l'habillage de siège (17) est réalisée sous la forme d'une couture (20) assemblant les deux zones (18, 19) de l'habillage de siège (17), adjacentes à l'ouverture de sortie pour le coussin gonflable (14), et le coussin gonflable (14) est assemblé à la couture (20) par sa partie (16) dirigée dans le sens de déploiement, et, de ce fait, est fixé contre la partie du siège (12).

2. Siège de véhicule selon la revendication 1, **caractérisé en ce que** le coussin gonflable (14) est assemblé directement à la couture (20) de l'habillage de siège (17).

3. Siège de véhicule selon la revendication 2, **caractérisé en ce que** la couture (20), assemblant les zones (18, 19) de l'habillage de siège (17), est guidée à travers le tissu du coussin gonflable (14).

4. Siège de véhicule selon la revendication 1, **caractérisé en ce que** le coussin gonflable (14) est assemblé indirectement à la couture (20) de l'habillage de siège (17).

5. Siège de véhicule selon la revendication 4, **caractérisé en ce qu'**un organe de fixation (21) est saisi par la couture (20) de l'habillage de siège et est fixé contre l'habillage de siège (17), et le coussin gonflable (14) est fixé contre l'organe de fixation (21).

6. Siège de véhicule selon la revendication 5, **caractérisé en ce que** l'organe de fixation (21) est agencé entre les zones (18, 19) de l'habillage de siège, assemblées par la couture (20), et est transpercé par le matériau de couture.

7. Siège de véhicule selon la revendication 5 ou 6, **caractérisé en ce que** l'organe de fixation (21) est réalisé sous forme de bande de matériau et le coussin gonflable (14) est relié à la bande de matériau au moyen d'une couture fragile (30) séparée.

8. Siège de véhicule selon la revendication 7, **caractérisé en ce que** la bande de matériau est une bande textile.

9. Siège de véhicule selon la revendication 7, **caractérisé en ce que** la bande de matériau est une bande de matière plastique.

10. Siège de véhicule selon l'une quelconque des revendications 5 à 9, **caractérisé en ce que** la partie (16) du coussin gonflable (14), dirigée dans le sens de déploiement, est retournée vers l'intérieur, l'organe de fixation (21) s'engageant entre les zones latérales (26) du coussin gonflable (14), qui enserrent le bord retourné (25), et les zones latérales (26) étant assemblées à l'organe de fixation (21) par l'intermédiaire d'une couture fragile (31).

11. Siège de véhicule selon la revendication 10, **caractérisé en ce que**, en plus, les parties (27) supérieures et/ou inférieures du coussin gonflable (14) sont retournées.

12. Siège de véhicule selon l'une quelconque des revendications 5 à 9, **caractérisé en ce que** l'organe de fixation (21) comporte au niveau de son extrémité libre une structure (22) en forme de crochet pour maintenir le coussin gonflable (14).

13. Siège de véhicule selon la revendication 12, **caractérisé en ce que** le coussin gonflable (14) avec son orifice (23), réalisé dans sa zone de bordure, est accroché dans la structure (22) en forme de crochet de l'organe de fixation (21).

14. Siège de véhicule selon la revendication 12, **caractérisé en ce que** le coussin gonflable (14) comporte un jeu de fil (24) en forme de boucle, qui est accroché dans la structure (22) en forme de crochet de l'organe de fixation (21).

15. Siège de véhicule selon l'une quelconque des revendications 1 à 14, **caractérisé en ce que** la partie (16) du coussin gonflable (14), assemblée à la couture (20), est orientée en face de la partie de fixation (15) de ce dernier sur le générateur de gaz (13), de telle sorte qu'il se forme pour le coussin gonflable (14) dans la partie du siège (12) un logement allongé dans le sens de déploiement.
